Europäisches Patentamt

European Patent Office

Office européen des brevets

(11) Publication number: **0 274 883**
**A1**

## (12) EUROPEAN PATENT APPLICATION

(21) Application number: **87311117.3**

(22) Date of filing: **17.12.87**

(51) Int. Cl.⁴ **F16L 37/00** , F16L 17/00 ,
E21B 17/08

(30) Priority: **24.12.86 GB 8630850**

(43) Date of publication of application:
**20.07.88 Bulletin 88/29**

(84) Designated Contracting States:
**AT BE DE FR IT NL SE**

(71) Applicant: **R J POND LIMITED**
**Watledge Nailsworth**
**Stroud Gloucestershire, GL6 OAU(GB)**

(72) Inventor: **Pond, Richard James**
**Watledge Nailsworth**
**Stroud Gloucestershire GL6 0AU(GB)**

(74) Representative: **Jones-Robinson, Stanley**
**The Laurels 320 London Road Charlton**
**Kings**
**Cheltenham Gloucestershire GL52 6YJ(GB)**

(54) Pipeline joint.

(57) A pipeline joint comprises inner and outer joint members 1 and 2 which fit one within the other. The joint has a gripping collar 7 which is formed integrally of the outer joint member 2 and engages the inner joint member 1 to grip the latter and provide a metal-to-metal joint seal. The collar 7 is subject to the internal joint pressure within a surrounding space 11, which pressure urges the collar 7 into gripping and sealing engagement with the inner joint member 1.

FIG.1.

Xerox Copy Centre

## "PIPELINE JOINT"

The invention relates to pipeline joints, and in particular to joints which provide a pressure-assisted seal. It is particularly, but not exclusively, applicable to joints of so-called "quick-release" or "breakaway" type.

A quick-release joint allows quick disconnection of the connected pipes, and is typically used for surface connection to allow quick disconnection of hanging riser flowlines at a marine oil rig platform. A breakaway joint is designed to pull apart under an applied axial loading before damage occurs to the pipeline. Such a joint may be used in a subsea flowline to protect equipment, to which the flowline is connected, against damage should the flowline be caught by a dragged anchor, trawl line or net, for example.

In designing a quick-release or breakaway joint there are two main problems to be overcome. The first of these is to provide a joint which will part under a low or the desired external loading whilst the joint is not subject to high pressure parting loads due to internal working pressure; the second is to provide a reliable seal which will have a satisfactory service life. The joints at present available usually embody mechanical moving locking devices which present associated design and operating problems. The breakaway joints which are in use are generally unsatisfactory, and in particular they mainly employ resilient seals or metal bellows which are subject to long term failure in the environment to which they are subject in subsea pipelines. As a result, breakaway joints in particular are often not used even though usually included in the original pipeline specifications.

A joint which provides a pressure-assisted seal is conveniently also used as a pipe connector to couple sections of a pipeline where a permanent or semi-permanent connection is required. However, it is desirable that the pressure-assisted seal feature should result in connection or disconnection of the joint being a simple procedure. The invention is conveniently applied to such a joint, particularly a pipe connector for use in a subsea pipeline where it is adaptable for first or second end connection.

An object of the invention is to provide a joint which can be designed to provide a quick-release or breakaway facility and which then overcomes the foregoing problems and other problems of such prior joints. Another object is to provide a joint which can be designed for use as a straightforward pipe connector, which has a pressure-assisted seal and which is readily connectible and disconnectible.

According to the invention a pipeline joint has inner and outer joint members which fit one within the other, and a gripping collar which is formed integrally of the outer joint member and engages the inner joint member to grip the latter and provide the joint seal, the collar being subject to the internal pressure which urges it into gripping and sealing engagement with the inner joint member.

Thus the joint of the invention overcomes the first of said problems as an increase in internal pressure increases the frictional grip of the collar holding the joint together. Also, the metal-to-metal seal between the collar and the inner joint member meets the second of these problems, and there is no dependence on mechanical moving locking devices. Theoretically the joint can be designed as a breakaway joint so as to be pressure balanced and with a low or a predetermined residual resistance to parting, provided by the initial interference fit of the joint members, which determines the external parting load. However, when designed for use as a breakaway joint the joint preferably embodies a ring of shear pins which interconnect the inner and outer joint members and which determine the final predetermined breaking load.

When the joint is designed for use as a quick-release joint or a straightforward pipe connector, an externally accessible duct may be provided which leads to the metal-to-metal interface between the gripping collar of the outer joint member and the gripped surface of the inner joint member. This enables a fluid pressure to be applied via said duct between the gripping and gripped surfaces to part these surfaces radially, thus allowing the inner and outer joint members to be connected together or separated under light axial loading.

The gripping collar and inner joint member may have a cylindrical interface, either plain or stepped, but to cater for machining tolerances and surface variation the interengaged surfaces may have a mating taper of, say, 1° particularly when the joint is designed to have a breakaway function. With a breakaway joint the total interface may be of taper form, but preferred embodiments employ a main taper section and a shorter inner cylindrical section which provides the metal-to-metal seal.

With a joint designed to provide a quick-release facility or as a pipe connector the gripping and gripped surfaces at the interface between the joint members are preferably of cylindrical form with an interference fit, and are desirably of stepped cylindrical form. At least one of the surfaces, preferably the gripping internal surface of the gripping collar, may in a pipe connector not intended for quick-release use be grooved or serrated to increase the surface grip. Both surfaces may then be grooved so that they engage to provide a locking feature assisting the frictional grip, but it is preferred that light serration should be used for only one surface thereby effectively to improve the frictional grip.

Guide means may be associated with one of the joint members, preferably with the inner joint member, for engagement with and guidance of the other joint member as the joint members are connected or disconnected, in order to make or break the joint.

The joint members may have welded or flanged connections to the joined sections of the pipeline, and the collar is desirably subject to the internal joint pressure around the complete periphery of the collar. Preferably the collar is connected to the remainder of the outer joint member at its outer end only so that, in axial cross-section, it is of cantilevered form.

Whilst the invention is specifically described herein with reference to single bore pipeline joints, it will be appreciated that joints in accordance with the invention can also be designed for use in a multi-bore connection system. Thus, one or each of the joint members may be connectible to a bundle of pipes.

The invention will now be further described with reference to the accompanying drawings which illustrate, by way of example, preferred embodiments of the invention. In the drawings:

Fig. 1 illustrates in axial section a joint in accordance with the invention specifically designed to function as a breakaway joint;

Fig. 2 is a detail cross-section of the breakaway joint;

Fig. 3 is an axial sectional view illustrating another embodiment in the form of a pipe connector, showing inner and outer joint members at the commencement of assembly of the joint;

Fig. 4 similarly illustrates this joint in the assembled condition;

Figs. 5 and 6 are views similar to those of Figs. 3 and 4 but illustrating yet another embodiment of the invention in the form of a pipeline joint specifically designed to function as a quick-release joint; and

Fig. 7 diagrammatically illustrates the associated valve arrangement of an installation employing the quick-release joint of Figs. 5 and 6.

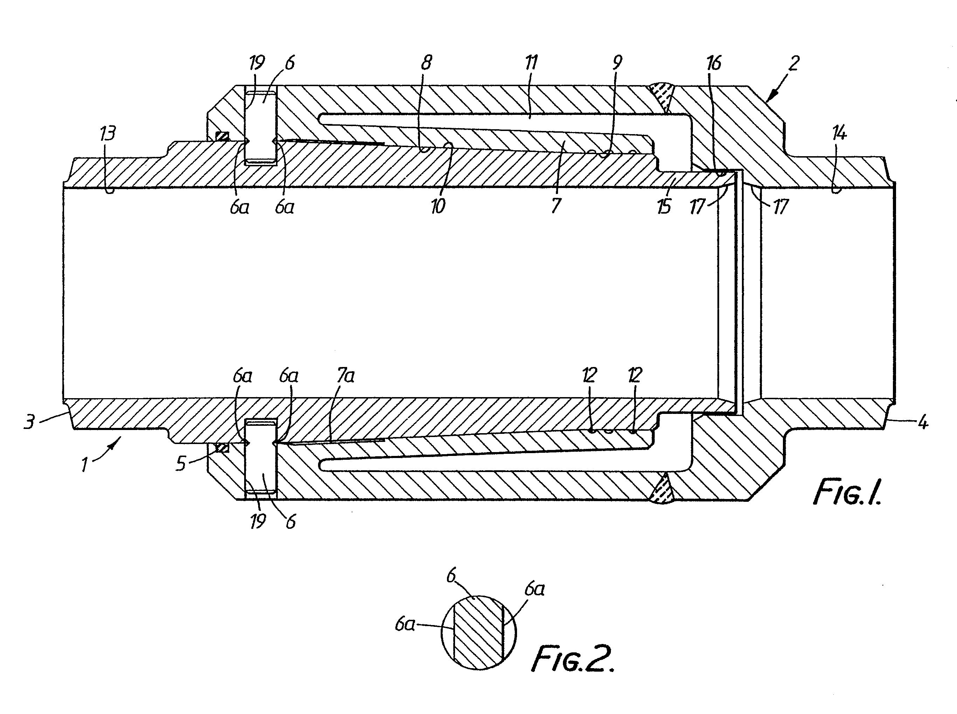

The joint shown in Figs. 1 and 2 substantially comprises two components, namely a metal inner joint member 1 and a metal outer joint member 2 fitted concentrically one within the other. The members 1 and 2 are in this case formed at their outer ends 3 and 4 for welding into a pipeline. The joint additionally comprises a lip-type wiper seal 5 let into the outer member 2 adjacent the outer end of the latter, and a ring of shear pins such as 6 to provide a final predetermined breakaway load for the joint.

The shear pins 6 each have two peripheral parallel notches 6a which extend laterally of the joint, in the fitted position of the pins, in the interface region of the joint members 1 and 2. This provides, in that region, the shear pin cross-section illustrated in Fig. 2. The significance of this cross-section is that it allows the joint to withstand high torsional loading whilst allowing a lower defined breakaway load axially of the joint, the shear strength of the pins 6 being greater laterally of the joint than axially thereof.

An annular friction gripping collar 7 is formed integrally with the outer member 2. The collar 7 has an outer taper bore section 8 and an inner end cylindrical bore section 9 both frictionally engaged with a mating outer surface 10 of the inner member 1, the collar 7 being connected to the main body of the outer member 2 only at its inner end. The taper angle of the bore section 9 is exaggerated in the drawing for the purpose of illustration, and in practice it will be relatively small, say 1° to 2°. An internal space 11 surrounding the collar 7 is subject to the fluid pressure within the joint, and the cylindrical bore section 9 of the collar has a series of peripheral grooves 12.

Relief is provided at 7a at the outer end of the collar 7. This is a design refinement which ensures that maximum flexibility is achieved at the collar 7 without adding in the strength effect of the solid end of the joint member 2 to which the collar 7 is integrally connected.

The joint members 1 and 2 have aligned bores 13 15 and 14 of the same diameter, and to ensure that pigs passed along the pipeline will not become hung up between the joint members 1 and 2 whilst passing through the joint the member 1 has an inner end nose portion which projects into a recess 16 in the member 2 at the inner end of the bore 14. This provides an overlap with lead-in/out tapers 17 and a clearance is left within the recess 16 so that the internal joint pressure can access the space 11.

The internal volume of the joint between the two members 1 and 2, which includes the space 11, is filled on assembly of the joint with a preservative grease and the wiper seal 5 ensures that sea-water does not reach the frictionally engaged surfaces 8,9 and 10. Thus these surfaces are completely protected against long-term corrosion and the frictional and sealing characteristics of the joint will remain unchanged for an indefinite period.

The design of the joint centres around the friction gripping collar 7, the taper bore section 8 of which mainly provides the pressure-assisted frictional grip whereas the cylindrical bore section 9 mainly provides the metal seal with the inner joint member 1. As the friction grip is a linear function of the internal pressure, the length of the collar 7 can be selected to provide a frictional resistance equal to the pressure parting load at all pressure levels so that a balanced system results. An external load applied to the connected pipework will create an out-of-balance loading to shear the pins 6 and pull the joint apart.

The members 1 and 2 are an interference fit one within the other in zero pressure conditions, and it will be appreciated that due to the taper face interengagement at the collar 7 the grip in these conditions will depend upon the relative axial positioning of the members 1 and 2. Thus, to set up the joint initially the member 1 is entered into the member 2 and is positioned by previous calibration to give a predetermined frictional preload. Drilled holes 19 are then reamed to fit the shear pins 6 which are then inserted. During parting of the joint when the designed breakaway external load is applied, the initial parting leakage reduces the internal joint pressure and this helps to release the friction lock of the collar 7. The interengaged faces may be grease coated or otherwise treated on assembly, to maintain constant frictional characteristics and preclude any danger of molecular bonding of these surfaces.

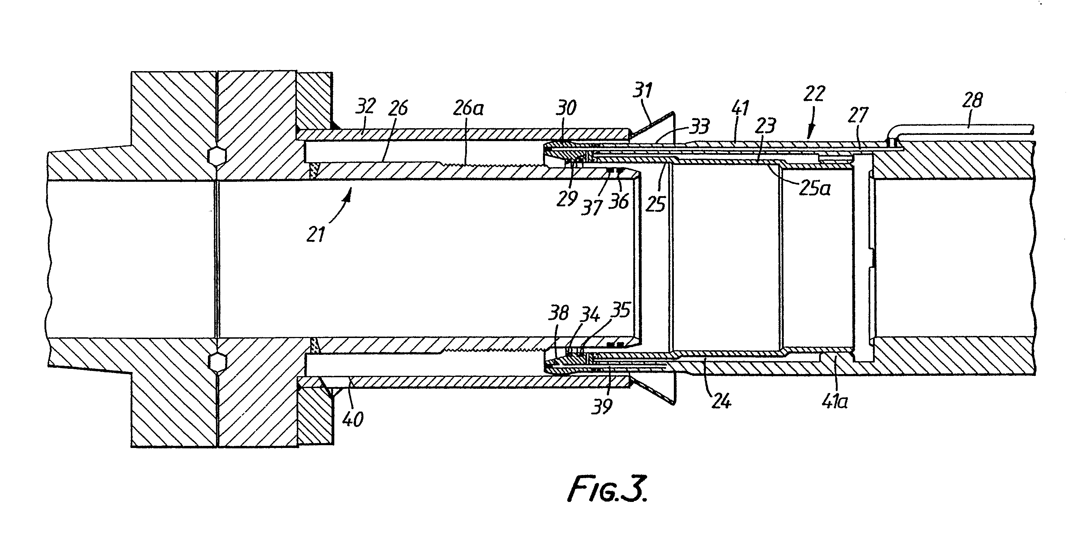

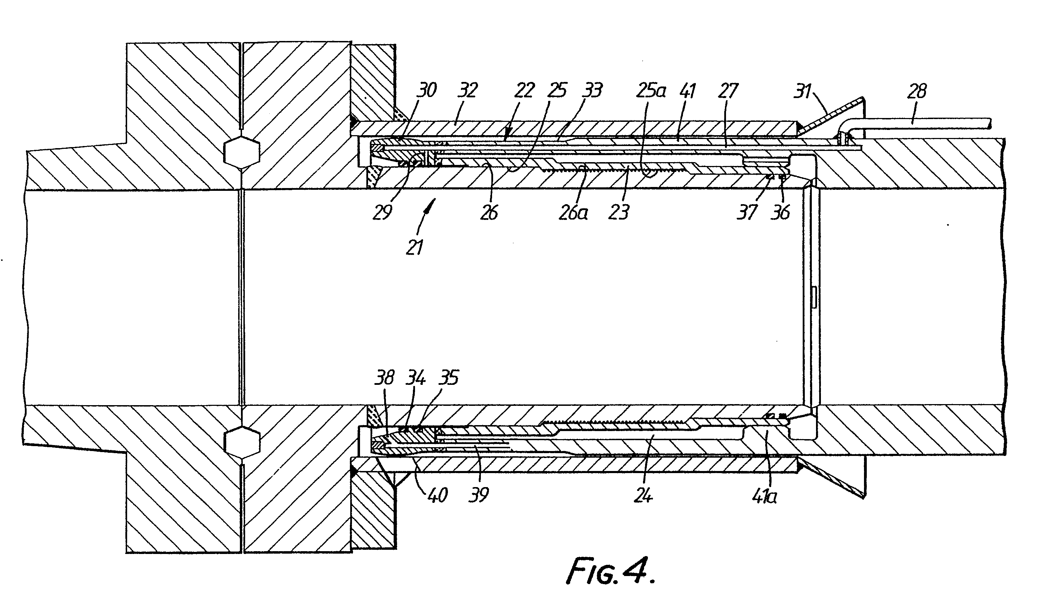

The pipe connector of Figs. 3 and 4 has metal inner and outer joint members 21 and 22 which in the assembled condition (Fig. 4) fit concentrically one within the other. The outer member 22 is again formed with an annular gripping collar 23, with an annular space 24 surrounding the complete periphery of the collar being accessible to the internal working pressure of the joint to urge the collar 23 into frictional gripping engagement with the inner member 21. However, in this case the collar 23 and the fitting gripped length of the inner member 21 have stepped cylindrical surfaces 25 and 26 with interference fits in the assembled condition.

The shear pins of the earlier embodiment are omitted as the breakaway facility thereof is not required, the joint being designed with an overgripping capacity above end cap parting pressure and any other external forces which will be applied in the assembly for which the joint is designed. To reduce the length of the gripping collar 23 whilst still providing sufficient frictional grip, the central mating diameter of the stepped interface is serrated to increase the local frictional grip. Both the central step surfaces, at 25a and 26a, may be serrated to provide a series of shear ridges resulting in a thread-like grip, or alternatively only one of these central surfaces may be more prominently serrated allowing the mating interface load to bed the other surface into the serrated surface.

An important feature of the joint illustrated in Figs. 3 and 4 is that it can be connected subsea by simply extending the female portion or outer member 22 over the male portion or inner member 21. An externally accessible duct 27, shown with a flexible connecting conduit 28 allows a fluid pressure to be externally applied via a port 29 to the interface region at the surfaces 25 and 26. As the members 21 and 22 are brought together a bulbous nose portion 30 of the outer member 22 engages a guide cone 31 at the outer end of a guide tube 32 of the inner member 21. The tube 32 is concentric with the stepped surface 26, and as the members 21 and 22 move together engagement of the nose portion 30 within the tube 32 provides accurate centring.

Immediately behind the nose portion 30 the outer surface of the collar 23 is cut away at 33 so that this outer surface does not engage the tube 32 until a length of insertion has been achieved sufficient to ensure that the member 22 will not "stick" within the guide tube 32 but will move freely along it to the fully assembled position shown in Fig. 4. At the leading end and adjacent the nose portion 30 the member 22 has a scraper ring 34 and a resilient O-ring seal 35. The leading end of the inner member 21 is similarly provided with a scraper ring 36 and an O-ring seal 37. The scraper rings 34,36 protect the mating surfaces 25,26 and the O-rings 35,37 contain within the interface space, between the surfaces 25 and 26, an "unlock" pressure applied externally via the duct 27.

As the members 21 and 22 are brought together they are initially aligned by means of the guide tube 32, and as the steps of the surfaces 25 and 26 start to engage said unlock pressure is introduced between them. This pressure is contained by the O-ring seals 35,37 and serves to spread the surfaces apart, mainly by radial expansion of the relatively thin collar 23. With the unlock pressure maintained the joint members 21 and 22 can be fully mated together, reaching the assembled relative position shown in Fig. 4. Once this position is reached the unlock hydraulic pressure is removed to provide a clamped connection between the members 21 and 22. It will be appreciated that if joint disconnection is at any time required, it can be achieved by the reverse procedure after introduction of a sufficient unlock pressure, via the duct 27, at the joint interface.

The joint is designed so that when assembled, with the unlock pressure removed, the interface pressure is sufficient to provide a metal seal and also interface friction to prevent the joint members 21 and 22 from separating. During operation the internal joint pressure around the collar 23 increases the frictional grip of the latter to provide an increased clamping load to increase both the frictional grip and the metal-to-metal seal at the interface. It will be appreciated that the grip characteristics are designed to suit the joint application. Solely as an example, in one particular design the joint has an interference fit at the surfaces 25 and 26 which provides an interface pressure (with zero internal joint pressure) of 2000 psi and connection (or disconnection) utilises an unlock pressure of around 3000 psi.

In addition to the scraper ring 34, the leading end of the outer member 22 has a ring of jetting nozzle holes such as 38 directed inwardly. These are supplied externally via a duct 39 to clean the surface 26 and ensure that no debris is allowed to stick thereto as the members 21 and 22 are fitted together. Debris exit holes such as 40 are provide at the rear end of the outer guide tube 32.

The connector as illustrated is as strong as the connecting pipework with bending and coupling loads being transmitted via the outer pressure casing 41 back through to the nose end of the inner member 21. It will be appreciated that the invention allows a comparatively thin clamping collar 23 to be employed to provide the joint seal and assembly clamping force. This allows a minimal unlock pressure to be used whilst making the connection, due to the flexibility of the thin collar 23, whilst at the same time readily allowing the pressure loading at the external periphery of the collar 23 to be transferred through to the male inner member 21.

Although the duct 27 and port 29 have been illustrated as provided in the outer member 22, it will be appreciated that this was a matter of choice and that they could instead have been provided in the inner member 21.

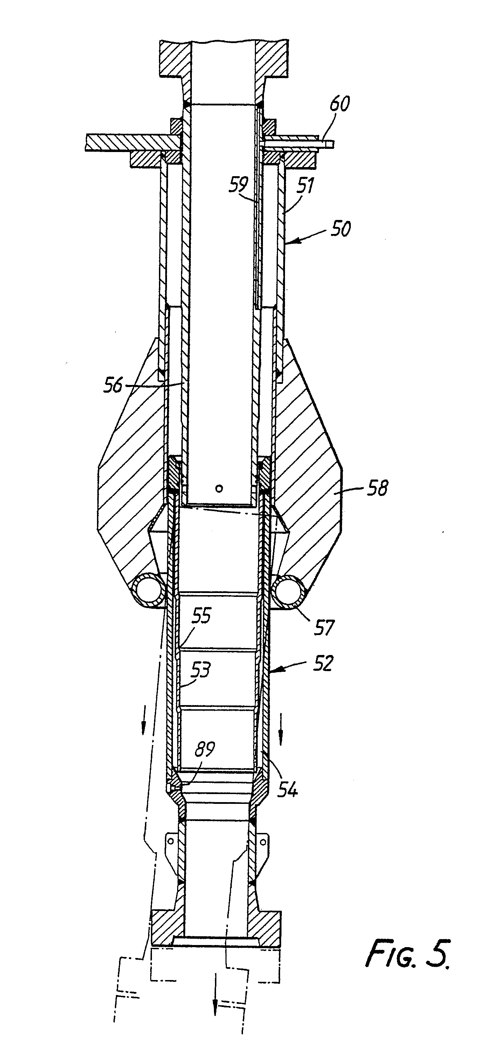

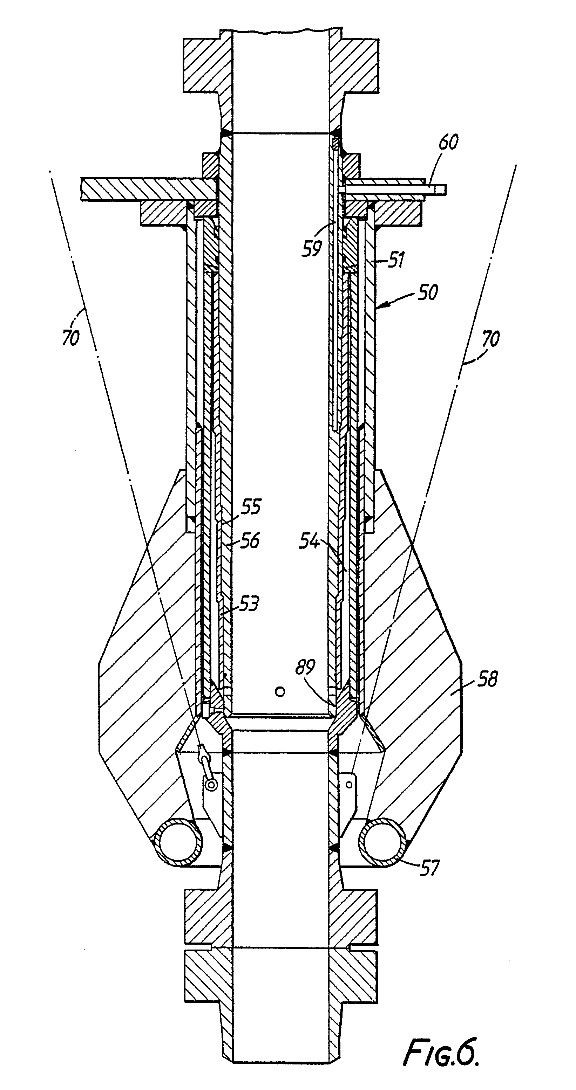

The quick-release connector or joint of Figs. 5 and 6 is generally similar in construction to that of Figs. 3 and 4, although it is specifically designed to be used for surface connection to allow quick emergency disconnection of hanging riser flowlines at a marine oil platform, in which vertical orientation it is shown. Thus an inner joint member 50 with external guide tube 51 is received within an outer joint member 52 having an integral gripping collar 53, with the space 54 surrounding the latter being subject to the internal joint working pressure. Again the collar has a gripping surface 55, and the inner member 50 has a mating gripped surface 56, which are of stepped cylindrical form.

As before each of these surfaces 55,56 is stepped but now comprises four steps, but none of the step surfaces is serrated because minimal friction is required during the parting of the joint members 50 and 52. This results, for a given frictional grip of the collar 53, in a longer joint unit but the increased length is easily accommodated due to the comparatively small body diameters and general simplicity as compared with known quick-release joints. Instead of the bulbous nose portion 30 of the last embodiment to prevent jamming of the outer member 52 as it is released, a separate reaction ring 57 is attached by hanger plates 58 to the base of the guide tube 51.

In this case the duct 59 for introduction of the unlock pressure at the interface is formed in the joint member 50, with an external connection 60 fitted at the side thereof. The joint is made as previously described in connection with Figs. 3 and 4, in Fig. 6 cables 70 being illustrated which are attached to the outer (lower) joint member 52 to winch the member 52, with connected riser, to the assembled position over the inner (upper) joint member 50. The interference fit at the interface between the members again provides the joint seal and sufficient frictional grip to maintain the connection, which in this case supports the weight of the riser in addition to the end cap parting pressure. The cables 70 are detached after assembly of the joint.

For a quick emergency detachment of the riser at the joint, the required unlock pressure is introduced at the interface via the connection 60 and duct 59. The step diameters of the surfaces 55,56 are somewhat increased as compared with those of the Figs. 3 and 4 embodiment, the reason for this being to provide a substantial end blow apart force when the unlock pressure is applied at the interface. This force depends on the unlock pressure used and the step areas, and it assists the joint members to separate under the weight of the supported riser which falls down to the seabed unless otherwise supported. For regular testing of the quick-disconnect feature the cables 70 are re-attached so that the falling away of the riser is checked after the joint members separate, and the joint can then be remade as has been described.

As the present joint is designed for surface applications, it is hauled to place by cable winches where it can be generally cleaned before assembly. Thus the cleaning jets of the earlier embodiment, for example, are not required.

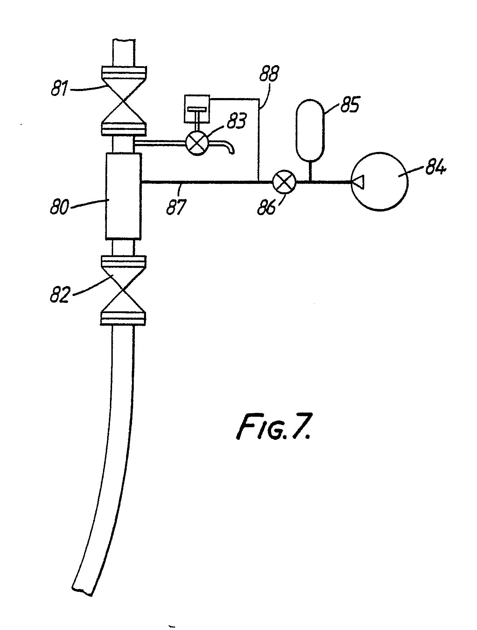

Use of the described quick-release joint involves some special installation requirements, the associated valves of a typical installation being shown in Fig. 7. In this figure the joint is illustrated at 80 and is connected between an isolator valve 81 on the oil rig platform and a flowline isolator valve 82 in the connected riser. The valves 81 and 82, which are normally open, are closed prior to release of the joint in order to prevent spillage. A vent valve 83 is connected between the joint 80 and the valve 81, and the joint could be designed so that this valve connects directly to the joint itself.

A hydraulic pump 84 charges an accumulator 85 and operation of a control valve 86 applies the unlock pressure to the joint interface, via conduit 87, and also actuates the vent valve 83 via conduit 88. Opening of the vent valve 83 initially relieves the internal joint pressure from the gripping collar 53 and it will be appreciated that this valve must be opened, during either connection or disconnection of the joint 80, to avoid a hydraulic lock occurring which would prevent relative axial movement of the joint members 50 and 52 in either direction.

The joints illustrated, whilst utilizing the advantages of a relatively thin and flexible gripping collar 7, 23 or 53, have the advantage of being as strong as the pipelines in which they are connected. From this strength point of view they are the equivalent of welded joints, and this strength is achieved by ensuring that the bending moments transmitted through the joint are not sustained by the gripping collars. To this end the nose portion 15 of the inner member 1 of Fig. 1 is received in the recess 16 as has been described. Similarly, with the embodiment of Figs. 6 and 7, the outer member 52 has an annular recess 89 in which the nose end of the inner member 50 is received.

The embodiment of Figs. 3 and 4 employs a different construction to ensure that the collar 23 does not sustain bending moments. The free end of the collar 23 has a very small radial clearance within an annular stop ring 41a formed integrally within the pressure casing 41. In the assembled position the nose end of the member 21 is positioned within the ring 41a.

It will be clear from the foregoing that as applied to the joint members the terms "inner" and "outer" are used herein with reference to the relationship of the interengaging joint surfaces. Thus, the inner joint member is to be taken as the one which presents an external male joint surface and the outer joint member as the one which presents an internal female joint surface engaged by the male surface.

## Claims

1. A pipeline joint with inner and outer joint members which fit one within the other, characterized by a gripping collar (7,23,53) which is formed integrally of the outer joint member (2,22,52) and engages the inner joint member (1,21,50) to grip the latter and provide the joint seal, the collar (7,23,53) being subject to the internal fluid pressure which urges it into gripping and sealing engagement with the inner joint member (1,21,50).

2. A pipeline joint according to claim 1, characterized in that the gripping collar (23,53) and the inner joint member (21,50) have a plain or stepped cylindrical interface (25,26;55,56).

3. A pipeline joint according to claim 1, wherein the joint is designed to provide a breakaway function and is characterized in that interengaging surfaces (8,10) of the collar (7) and the inner member (1) have a mating taper.

4. A pipeline joint according to claim 3, characterized in that said interengaging surfaces (8,10) have a main tapered section and a shorter inner cylindrical section which provides a metal-to-metal seal of the joint.

5. A pipeline joint according to any one of the preceding claims, wherein the joint is designed for use as a breakaway joint and is characterized in that it is pressure balanced with respect to the internal fluid pressure, and has a low or a predetermined residual resistance to parting provided by the initial interference fit of the joint members (1,2) which determines the external parting load.

6. A pipeline joint according to any one of claims 1 to 4, wherein the joint is designed for use as a breakaway joint and is characterized in that it embodies a ring of shear pins (6) which interconnect the inner and outer joint members (1,2) and which determine the final predetermined breaking load.

7. A pipeline joint according to any one of the preceding claims, characterized in that an externally connectible duct (27,59) is provided which leads to the interface between the gripping collar (23,53) of the outer joint member (22,52) and the gripped surface (26,56) of the inner joint member (21,50) to enable a fluid pressure to be applied via said duct (27,59) to part the gripping and gripped surfaces (25,26;55,56) radially.

8. A pipeline joint according to any one of the preceding claims, characterized in that guide means (31,32;57) associated with one of the joint members (21,50) are engageable by the other joint member (22,52) for mutual guidance of the joint members (21,22;50,52) as they are connected or disconnected.

9. A pipeline joint according to claim 8, characterized in that the guide means comprise a guide tube (32) integral with the inner joint member (21) and in that the outer joint member (22) has at the leading end a bulbous nose (30) which initially engages the guide means and an outer cylindrical surface which is a sliding guidance fit within the guide tube (32), said surface being cut away (33) immediately behind the bulbous nose (30) to provide radial clearance until a predetermined length of the outer joint member (22) has entered the guide tube (32).

10. A pipeline joint according to any one of preceding claims, characterized in that the gripping collar (7,23,53) is connected to the remainder of the outer joint member (2,22,52) at its outer end only so that, in axial cross-section, it is of cantilevered form.

11. A pipeline joint according to any one of the preceding claims, characterized in that the construction is such that bending stresses are transmitted between said inner (1,21,50) and outer (2,22,52) joint members in such manner that bending moments are not sustained by the gripping collar (7,23,53).

12. A pipeline joint according to claim 7, characterized in that it is adapted to operate as a quick-release joint (80) embodied in an installation connecting a hanging riser flowline at a marine oil rig platform; the installation comprising an isolator valve (81) at the platform, a flowline isolator valve (82), the quick-release joint being connected between said isolator valves (81,82), a vent valve (83) connected between the isolator valves (81,82), a fluid pressure source (84,85) and control means for closing said isolator valves (81,82), opening said vent valve (83) and introducing fluid pressure at the interface between the joint members (50,52) to release the joint (80).

FIG.1.

FIG.2.

0 274 883

*FIG.3.*

FIG.4.

0 274 883

FIG. 5.

FIG.6.

81

88

83

85

80

87

86

84

82

FIG.7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 104 172 (SOEDERHUYZEN) <br> * Figures * <br> --- | 1,2 | F 16 L 37/00 <br> F 16 L 17/00 <br> E 21 B 17/08 |
| X | FR-A-2 211 619 (ROYER DUMANS) <br> * Page 1, line 25 - page 2, line 9; figures * <br> --- | 1,2 | |
| A | GB-A-1 594 913 (OTIS ENGINEERING CORP.) <br> * Page 2, lines 123-128; figure 7 * <br> --- | 1,3,6 | |
| A | GB-A-2 153 027 (REIMERT) <br> * Abstract; figure 1 * <br> --- | 1,4,7 | |
| A | DE-B-1 525 921 (HANES) <br> * Figures * <br> --- | 1,10 | |
| A | GB-A-1 282 690 (VETCO OFFSHORE INDUSTRIES) <br> * Figures * <br> ----- | 1,8,9 | |

TECHNICAL FIELDS SEARCHED (Int. Cl.4)

F 16 L
E 21 B

The present search report has been drawn up for all claims

| Place of search | Date of completion of the search | Examiner |
|---|---|---|
| THE HAGUE | 22-03-1988 | HUBEAU M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)